# EUROPEAN PATENT SPECIFICATION

(11) **EP 3 480 591 B1**
(45) Date of publication and mention of the grant of the patent: **06.10.2021**
(21) Application number: 17200173.7
(22) Date of filing: 06.11.2017
(51) Int. Cl.: G01N 29/04, G01N 29/22, G01N 29/265, G01N 29/28

(54) **ULTRASONIC PIPELINE INSPECTION SYSTEM AND METHOD**
ULTRASCHALLSYSTEM UND -VERFAHREN ZUR PIPELINE-INSPEKTION
PROCÉDÉ ET SYSTÈME ULTRASONORE D'INSPECTION DE PIPELINE

(43) Date of publication of application: 08.05.2019
(73) Proprietor: NDT Global Corporate Ltd. Ireland, Dublin 9 (IE)
(72) Inventor: Bain, Andy, Dublin, 9 (IE); Abu-Aisha, Ibrahim, Dublin, 9 (IE)
(74) Representative: Global IP Europe Patentanwaltskanzlei

(56) References cited:
- EP-A1- 2 527 707
- US-A- 5 460 046
- US-A1- 2009 158 850

## Description

### Technical Field

The present invention relates to the inspection of pipelines by means of pipeline inline inspection tools.

### Background

Pipelines have been used for many years to transport various fluids, such as crude oil, natural gas, and such like. These pipelines are often operated at high pressures and may be exposed to adverse conditions, such as varying ambient temperatures and/or temperatures of the conveyed products, which over time can lead to ruptures or leaks. The detrimental effects of such operation conditions may be compounded by inherent flaws due to faulty weld joints or damage to the pipe during transportation / installation. Pipelines which have been in use for some period of time are also subject to leak or rupture due to corrosion.

So-called inline inspection tools are typically used in the maintenance and inspection of pipelines to perform various operations within a pipeline such as cleaning the pipelines or monitoring the internal surfaces and wall thicknesses. To this end, inline inspection tools are typically inserted into a tool launcher or launch trap. Pressure may then be added that pushes the pipeline inspection tool into and along the pipeline until it reaches a tool receiver where it can be removed from the pipeline. The required pressure may alternatively originate from the fluid (oil, gas, etc.) flowing through the pipeline. Inline inspection tools can therefore be used following product transfer through a pipeline, e.g. at the end of a batch process, or whilst product is flowing through the pipeline in a continuous process.

One form of inline inspection of pipelines using inline inspection tools is based on the application of ultrasonic testing. Whilst this is a practical solution in pipelines through which liquids such as oil or refined products are being transported and where the pipeline medium acts as a reliable couplant for the ultrasonic beam to pass into the pipeline steel, this is not the case for gas pipelines. The lack of a suitable couplant by which the acoustic energy emitted by the ultrasonic transducer is coupled to the pipe wall prevents the ultrasonic testing technique from working in such gas pipelines.

United States Patent application US 2009/158850 A1 discloses a pipe inspection tool comprising transducers housed in a fluid filled cavity of the tool surrounded by a toroidal rubber membrane.

Given that the couplant is whatever fluid the pipeline is transporting and the designer of an inline inspection tool therefore does not have a choice in the couplant, attempts have been made to control and enhance the ability of the ultrasonic transducers to provide closer acoustic impedance matches to the most common pipeline fluids from heavy crude oils to gas. According to EP 0 684 446 A2, for instance, the use of specifically configured, multi-element ultrasonic transducers instead of monolithic piezoelectric transducers is suggested.

It is therefore an object of the present invention to provide an improved system and method of inspection of gas pipelines by means of ultrasonic testing avoiding the aforementioned difficulties and downsides.

### Summary of Embodiments of the Invention

According to a first aspect of the present invention, there is provided a pipeline inspection system according to claim 1.

The ultrasonic transducer system may comprise at least one individual (monolithic) transducer. Alternatively or in addition, the ultrasonic transducer system may comprise at least one multi-element transducer having a number of small piezoelectric elements arranged in an array such that all elements are electrically driven by the control circuitry.

The gelled mass surrounding the inline inspection tool thereby acts as a homogeneous couplant and allows ultrasound signals to travel from the ultrasonic transducer system to the pipeline wall and back. The present invention is based on the insight that liquid couplants, especially water, are unsuitable for use in gas pipelines. Water, for instance, is a particularly undesirable foreign matter in gas pipelines and especially in pipelines carrying natural gas having a high proportion of methane. It is well known that residual water will form hydrates with the methane under certain conditions which can lead to serious transmission difficulties and unexpected pipeline blockage.

In addition, the gelled mass surrounding the inline inspection tool can provide for a fluid sealing means causing the inline inspection tool to travel through the pipeline by the force of a fluid flowing in the pipeline during inspection. Thus, there is no or at least a reduced need for an inline inspection tool body having a circumferential surface and having fluid sealing means to cause the inline inspection tool body to travel through the pipe by the force of a fluid flowing in the pipe.

What is more, the gelled mass may also effect a cleaning action on the inner sidewalls of the pipeline whilst being pushed through the pipeline.

The gelled mass may further be configured to constitute a self-sustaining body during pipeline inspection having its peripheral surfaces contiguous with the inner surfaces of the inspected pipeline.

The gelled mass may also be configured to conform to a varying inner diameter of the inspected pipeline. Accordingly, the gelled mass is also applicable to dual or multi diameter pipelines.

The gelled mass comprises a leading portion, a middle portion in which the inline inspection tool is located during pipeline inspection, and a trailing portion, wherein at least one of the leading portion and the trailing portion comprises at least one sealing tool during pipeline inspection. Depending on the properties of the gelled mass and the fluid being transported in the pipeline, it may be necessary to employ sealing tools to protect the gelled mass and / or maintain its integrity / form.

The gelled mass (together with the inline inspection tool) may be configured to fit into the volume of a launcher thereby minimising disruptions and interference in the transport of the fluid in the pipeline to be inspected.

The gelled mass may be a high-viscosity medium having an acoustic impedance substantially matched to the ultrasonic transducer system.

The gelled mass may, during pipeline inspection, provide for a low bypass medium configured to be displaced through the inspected pipeline by a driving fluid behind the gelled mass thereby moving the inline inspection tool through the pipeline.

The system may further comprise a memory device configured to receive and store data representing processed signals from the control circuit as well as an interface configured to transmit the stored data during and / or after pipeline inspection. The interface may operate according to any communication protocol, such as IEEE 802.11, Bluetooth or 3G/4G.

According to a second aspect of the present invention there is provided a method of inspecting a pipeline according to claim 8.

Preferably, the steps of providing the inline inspection tool and surrounding the inline inspection tool in a gelled mass are carried out in the volume of a launcher and wherein the inline inspection tool surrounded by the gelled mass is subsequently launched into the pipeline.

The gelled mass has a leading portion, a middle portion in which the inline inspection tool is located, and a trailing portion, and said method may further comprise the steps of providing at least one sealing tool in the leading portion to seal the gelled mass against a fluid being transported through the pipeline; and/or providing at least one sealing tool in the trailing portion to seal the gelled mass against the fluid being transported through the pipeline.

A third aspect of the present invention relates to the use of a gelled mass as a medium that facilitates the transmission of ultrasonic energy during pipeline inspection according to claim 11. According to this third aspect, the medium is further configured to be used as a material surrounding an inline inspection tool carrying an ultrasonic transducer system during pipeline inspection.

### Brief Description of the Figures

Embodiments of the invention will now be described by way of example only, in which:
Figure 1 shows a first embodiment of a pipeline inspection system according to the present invention;
Figure 2 shows a second embodiment of a pipeline inspection system according to the present invention;
Figure 3 shows a third embodiment of a pipeline inspection system according to the present invention with sealing tools at either end of the system;
Figure 4 shows a fourth embodiment of a pipeline inspection system according to the present invention with two sealing tools at either end of the system; and
Figure 5 shows a pipeline inline inspection tool according to the present invention in a tool launcher before its launch into the pipeline;

### Detailed Description of Embodiments of the Invention

The following description is presented to enable a person skilled in the art to make and use the invention, and is provided in the context of a particular application. Various modifications to the disclosed embodiments will be readily apparent to those skilled in the art. The general principles defined herein may be applied to other embodiments and applications without departing from the scope of the present invention. Thus, the present invention is not intended to be limited to the embodiments shown, but is to be accorded the widest scope consistent with the principles and features disclosed herein.

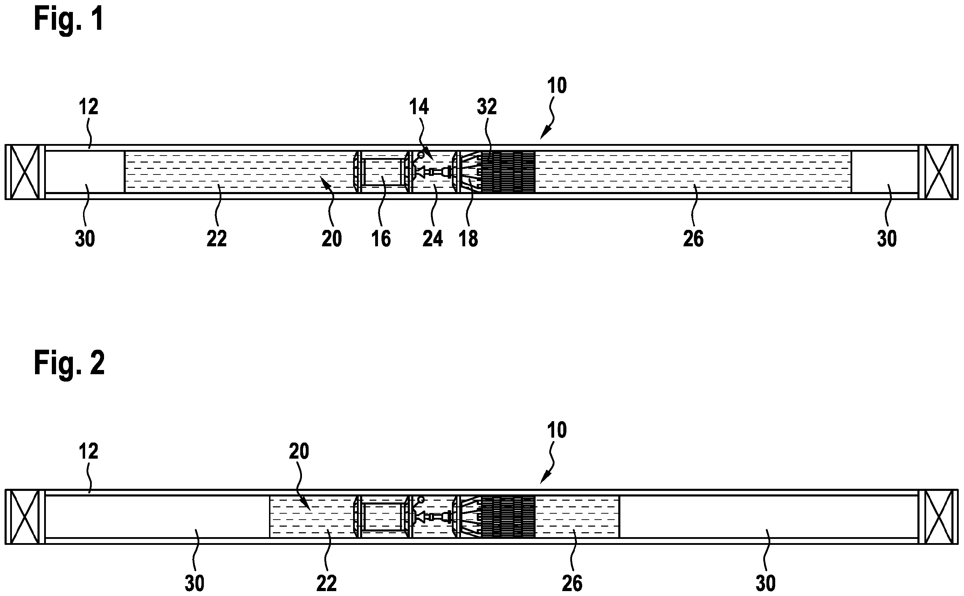

Figure 1 shows a first embodiment of a pipeline inspection system 10 according to the present invention. In Figure 1 the pipeline inspection system 10 is shown inserted into a pipeline 12 to be inspected having a generally circular cross-section.

The pipeline inspection system 10 comprises an inline inspection tool 14 having a first segment 16 and a second segment 18. The inline inspection tool 14 is surrounded by a gel mass 20 which consists of a leading portion 22, a middle portion 24, and a trailing portion 26. The inline inspection tool 14 is arranged in the middle portion 24 with the leading portion 22 ahead and the trailing portion 26 behind it in the direction of flow / movement through the pipeline 12.

On the inline inspection tool 14 there is arranged an ultrasonic transducer system 32 comprising an array of ultrasonic transducers configured to emit ultrasonic energy pulses in response to electrical pulses and convert received ultrasonic energy into electrical signals. The ultrasonic transducer system 32 is operatively coupled to control circuitry (not shown) configured to control the ultrasonic transducer system and process signals received from the ultrasonic transducer system. The inline inspection tool 14 further comprises a memory device (not shown) configured to receive and store data representing processed signals from the control circuit as well as a wired or wireless interface configured to transmit the stored data during or after pipeline inspection.

The pipeline inspection system 10 and thereby the tool 14 is caused to travel through the pipeline 12 by the force of a fluid 30 flowing in the pipeline 12. Due to its high viscosity and with the force of the fluid 30 acting on it, the gelled mass 20 forms an elongated body having its peripheral surfaces contiguous with the inner surfaces of the inspected pipeline. Accordingly, the gelled mass 20 provides for a low bypass medium surrounding the inline inspection tool 14.

Due to the presence of the gelled mass 20, ultrasonic waves can travel between the ultrasonic transducer system 32 and the sidewall of the pipeline 12. Preferably, the acoustic impedance of the gelled mass 20 is closely matched to the one of the ultrasonic transducer system 32.

Figure 2 shows a second embodiment of the present invention. According to this embodiment, the leading portion 22 and the trailing portion 26 of the gelled mass 20 are both of a shorter length compared to those of the first embodiment. Depending on the properties of the gelled mass, this may actually be sufficient to guarantee a safe passage of the pipeline inspection system 10 and specifically the inline inspection tool 14 through the pipeline 12.

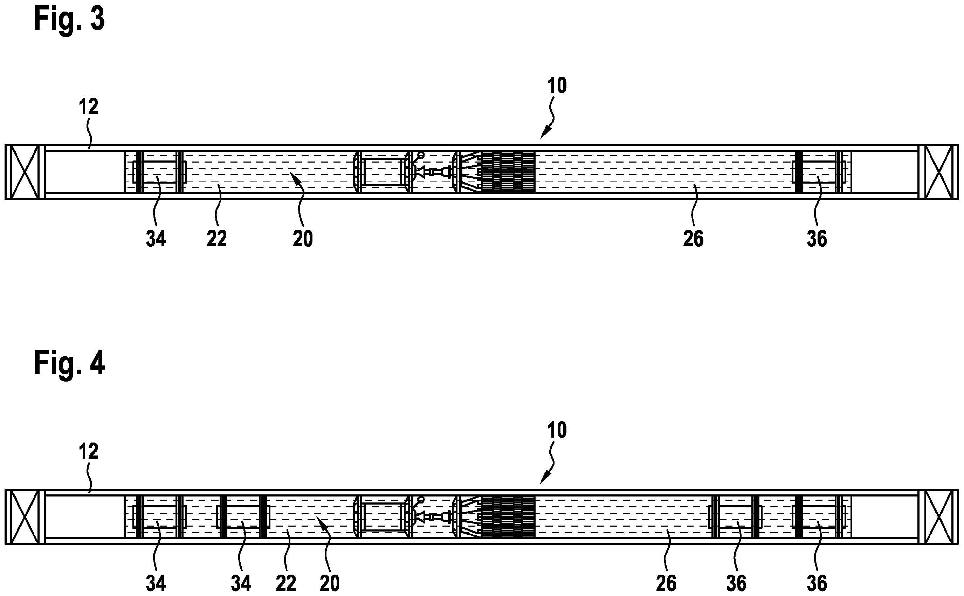

Figures 3 and 4 show additional embodiments of the present invention. These embodiments are substantially based on the embodiment according to Figure 1. In Figures 3 and 4, however, sealing tools 34, 36 have been added which help maintain the integrity of the gel batch 10 during inspection and prevent the gel body 20 from being contaminated in the course of the inspection process. As shown in Figure 3, a first sealing tool 34 is added at the front (i.e., the leading portion 22) of the pipeline inspection system 10 and a second sealing tool 36 is added at the back (i.e., the trailing portion 26). To further enhance the sealing effect, additional sealing tools 34, 36 can be added at the front and/or back of the batch 10, see Figure 4.

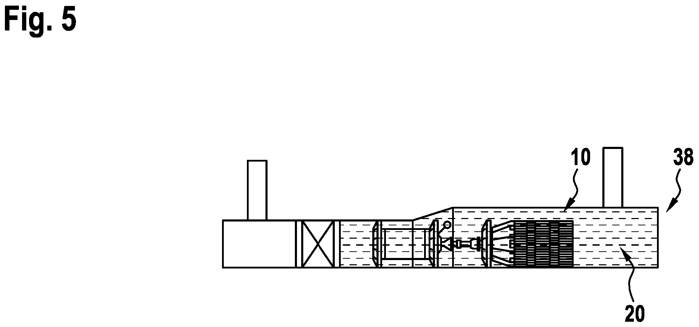

Figure 5 shows how a pipeline inspection system 10 according to the present invention is inserted into a launcher 38. As shown, the minimum volume of the system 10 is within the volume of a typical launcher 38. This effectively means that the selection of an inline-inspection tool using ultrasonic testing (ILI UT) would have a negligible impact on the pipeline operator. This, in turn, would provide the pipeline operator the full range of the highest accuracy tools for improved asset integrity management.

To ensure that the pipeline inspection system 10 fits within the volume of the inline inspection tool launcher 38, the inline inspection tool 14 is inserted first. Subsequently, the said volume is filled with a suitable fluid followed by a gelling agent / cross-linker causing the gelled mass 20 to form within the volume of the inline inspection tool launcher 38.

The scope of the invention is defined in the appended claims.

## Claims

1. A pipeline inspection system (10) comprising:
an ultrasonic transducer system (32) configured to emit ultrasonic energy pulses in response to electrical pulses and convert received ultrasonic energy into electrical signals;
an inline inspection tool (14) carrying the ultrasonic transducer system (32) ; and
control circuitry coupled to the ultrasonic transducer system (32) wherein the control circuitry is configured to control the ultrasonic transducer system (32) and process signals received from the ultrasonic transducer system (32); and
**characterized by** a gelled mass (20) configured to form an elongated body surrounding the inline inspection tool (14) during pipeline inspection, wherein the gelled mass (20) is further configured to constitute a self-sustaining body during pipeline inspection having its peripheral surfaces contiguous with the inner surfaces of the inspected pipeline (12), the gelled mass (20) comprising a leading portion (22), a middle portion (24) in which the inline inspection tool (14) is located during pipeline inspection, and a trailing portion (26).

2. The system according to claim 1, wherein the gelled mass (20) is configured to conform to a varying inner diameter of the inspected pipeline (12).

3. The system according to one of the preceding claims, wherein at least one of the leading portion (22) and the trailing portion (26) comprises at least one sealing tool (34, 36) during pipeline inspection.

4. The system according to one of the preceding claims, wherein the gelled mass (20) is configured to fit into the volume of an inline inspection tool launcher (38).

5. The system according to one of the preceding claims, wherein the gelled mass (20) is a high-viscosity medium having an acoustic impedance substantially matched to the ultrasonic transducer system (32).

6. The system according to one of the preceding claims, wherein the gelled mass (20), during pipeline inspection, provides for a low bypass medium configured to be displaced through the inspected pipeline by a driving fluid (30) behind the gelled mass (20) thereby moving the inline inspection tool (14) through the pipeline (12).

7. The system according to one of the preceding claims, further comprising a memory device configured to receive and store data representing processed signals from the control circuit as well as an interface configured to transmit the stored data during and / or after pipeline inspection.

8. A method of inspecting a pipeline comprising the following steps:
• providing an inline inspection tool carrying an ultrasonic transducer system configured to emit ultrasonic energy pulses in response to electrical pulses and convert received ultrasonic energy into electrical signals, wherein the ultrasonic transducer system is coupled to control circuitry being configured to control the ultrasonic transducer system and process signals received from the ultrasonic transducer system;
• surrounding the inline inspection tool in a gelled mass; and
• moving the inline inspection tool surrounded by the gelled mass through the pipeline
wherein the gelled mass (20) forms an elongated body surrounding the inline inspection tool (14) during pipeline inspection, wherein the gelled mass (20) is further configured to constitute a self-sustaining body during pipeline inspection having its peripheral surfaces contiguous with the inner surfaces of the inspected pipeline (12), the gelled mass (20) comprising a leading portion (22), a middle portion (24) in which the inline inspection tool (14) is located during pipeline inspection, and a trailing portion (26).

9. The method of claim 8, wherein the steps of providing the inline inspection tool and surrounding the inline inspection tool in a gelled mass are carried out in the volume of a launcher and wherein the inline inspection tool surrounded by the gelled mass is subsequently launched into the pipeline.

10. The method of one of claims 8 and 9 further comprising the steps of
• providing at least one sealing tool in the leading portion to seal the gelled mass against a fluid being transported through the pipeline; and/or
• providing at least one sealing tool in the trailing portion to seal the gelled mass against the fluid being transported through the pipeline.

11. Use of a gelled mass (20) as a medium that facilitates the transmission of ultrasonic energy during pipeline inspection and surrounds an inline inspection tool (14) carrying an ultrasonic transducer system (32) during pipeline inspection, wherein the gelled mass (20) is configured to form an elongated body surrounding the inline inspection tool (14) during pipeline inspection, wherein the gelled mass (20) is further configured to constitute a self-sustaining body during pipeline inspection having its peripheral surfaces contiguous with the inner surfaces of the inspected pipeline (12), the gelled mass (20) comprising a leading portion (22), a middle portion (24) in which the inline inspection tool (14) is located during pipeline inspection, and a trailing portion (26).

## Patentansprüche

1. Pipeline-Inspektionssystem (10), umfassend:
ein Ultraschallwandlersystem (32), das so ausgelegt ist, dass es in Reaktion auf elektrische Impulse Ultraschallenergieimpulse aussendet und empfangene Ultraschallenergie in elektrische Signale umwandelt;
ein Inline-Inspektionswerkzeug (14), dass das Ultraschallwandlersystem (32) trägt; und
Steuerschaltungen, die mit dem Ultraschallwandlersystem (32) gekoppelt sind, wobei die Steuerschaltungen so ausgelegt sind, dass sie das Ultraschallwandlersystem (32) steuern und Signale, die vom Ultraschallwandlersystem (32) empfangen werden, verarbeiten; und
**gekennzeichnet durch** eine gelierte Masse (20), die so ausgelegt ist, dass sie einen länglichen Körper bildet, der das Inline-Inspektionswerkzeug (14) während der Pipeline-Inspektion umgibt, wobei die gelierte Masse (20) weiter so ausgelegt ist, dass sie während der Pipeline-Inspektion einen selbsttragenden Körper darstellt, dessen Umfangsflächen an die Innenflächen der inspizierten Pipeline (12) angrenzen, wobei die gelierte Masse (20) einen vorderen Abschnitt (22), einen mittleren Abschnitt (24), in dem sich das Inline-Inspektionswerkzeug (14) während der Pipeline-Inspektion befindet, und einen hinteren Abschnitt (26) umfasst.

2. System nach Anspruch 1, wobei die gelierte Masse (20) so ausgelegt ist, dass sie sich einem variierenden Innendurchmesser der inspizierten Pipeline (12) anpasst.

3. System nach einem der vorstehenden Ansprüche, wobei mindestens einer aus dem vorderen Abschnitt (22) und dem hinteren Abschnitt (26) während der Pipeline-Inspektion mindestens ein Versiegelungswerkzeug (34, 36) umfasst.

4. System nach einem der vorstehenden Ansprüche, wobei die gelierte Masse (20) so ausgelegt ist, dass sie in das Volumen einer Starteinrichtung (38) des Inline-Inspektionswerkzeugs passt.

5. System nach einem der vorstehenden Ansprüche, wobei es sich bei der gelierten Masse (20) um ein hochviskoses Medium mit einer akustischen Impedanz handelt, die im Wesentlichen auf das Ultraschallwandlersystem (32) abgestimmt ist.

6. System nach einem der vorstehenden Ansprüche, wobei die gelierte Masse (20) während der Pipeline-Inspektion für ein Medium mit geringer Umgehung sorgt, das so ausgelegt ist, dass es durch ein Treibfluid (30) hinter der gelierten Masse (20) durch die inspizierte Pipeline geschoben wird, wodurch das Inline-Inspektionswerkzeug (14) durch die Pipeline (12) bewegt wird.

7. System nach einem der vorstehenden Ansprüche, das weiter eine Speichervorrichtung, die so ausgelegt ist, dass sie Daten, die verarbeitete Signale darstellen, von der Steuerschaltung empfängt und speichert, sowie eine Schnittstelle umfasst, die so ausgelegt ist, dass sie die gespeicherten Daten während und/oder nach der Pipeline-Inspektion überträgt.

8. Verfahren zum Inspizieren einer Pipeline, das die folgenden Schritte umfasst:
- Bereitstellen eines Inline-Inspektionswerkzeugs, das ein Ultraschallwandlersystem trägt, welches so ausgelegt ist, dass es in Reaktion auf elektrische Impulse Ultraschallenergieimpulse aussendet und empfangene Ultraschallenergie in elektrische Signale umwandelt, wobei das Ultraschallwandlersystem mit Steuerschaltungen gekoppelt ist, die so ausgelegt sind, dass sie das Ultraschallwandlersystem steuern und Signale, die vom Ultraschallwandlersystem empfangen werden, verarbeiten;
- Umgeben des Inline-Inspektionswerkzeugs mit einer gelierten Masse; und
- Bewegen des von der gelierten Masse umgebenen Inline-Inspektionswerkzeugs durch die Pipeline,
wobei die gelierte Masse (20) einen länglichen Körper bildet, der das Inline-Inspektionswerkzeug (14) während der Pipeline-Inspektion umgibt, wobei die gelierte Masse (20) weiter so ausgelegt ist, dass sie während der Pipeline-Inspektion einen selbsttragenden Körper darstellt, dessen Umfangsflächen an die Innenflächen der inspizierten Pipeline (12) angrenzen, wobei die gelierte Masse (20) einen vorderen Abschnitt (22), einen mittleren Abschnitt (24), in dem sich das Inline-Inspektionswerkzeug (14) während der Pipeline-Inspektion befindet, und einen hinteren Abschnitt (26) umfasst.

9. Verfahren nach Anspruch 8, wobei die Schritte des Bereitstellens des Inline-Inspektionswerkzeugs und des Umgebens des Inline-Inspektionswerkzeugs mit einer gelierten Masse im Volumen einer Starteinrichtung ausgeführt werden, und wobei das von der gelierten Masse umgebene Inline-Inspektionswerkzeug anschließend in die Pipeline gestartet wird.

10. Verfahren nach einem der Ansprüche 8 und 9, das weiter die Schritte umfasst des
- Bereitstellens mindestens eines Versiegelungswerkzeugs im vorderen Abschnitt, um die gelierte Masse gegenüber einem Fluid, das durch die Pipeline transportiert wird, zu versiegeln; und/oder
- Bereitstellens mindestens eines Versiegelungswerkzeugs im hinteren Abschnitt, um die gelierte Masse gegenüber dem Fluid, das durch die Pipeline transportiert wird, zu versiegeln.

11. Verwendung einer gelierten Masse (20) als ein Medium, das die Übertragung von Ultraschallenergie während der Pipeline-Inspektion begünstigt und ein Inline-Inspektionswerkzeug (14), das ein Ultraschallwandlersystem (32) trägt, während der Pipeline-Inspektion umgibt, wobei die gelierte Masse (20) so ausgelegt ist, dass sie einen länglichen Körper bildet, der das Inline-Inspektionswerkzeug (14) während der Pipeline-Inspektion umgibt, wobei die gelierte Masse (20) weiter so ausgelegt ist, dass sie während der Pipeline-Inspektion einen selbsttragenden Körper darstellt, dessen Umfangsflächen an die Innenflächen der inspizierten Pipeline (12) angrenzen, wobei die gelierte Masse (20) einen vorderen Abschnitt (22), einen mittleren Abschnitt (24), in dem sich das Inline-Inspektionswerkzeug (14) während der Pipeline-Inspektion befindet, und einen hinteren Abschnitt (26) umfasst.

## Revendications

1. Système d'inspection de pipeline (10), comprenant :
un système de transducteur ultrasonore (32) configuré pour émettre des impulsions d'énergie ultrasonore en réponse à des impulsions électriques et convertir l'énergie ultrasonore reçue en signaux électriques ;
un outil d'inspection en ligne (14) portant le système de transducteur ultrasonore (32) ; et
des circuits de commande couplés au système de transducteur ultrasonore (32), dans lequel les circuits de commande sont configurés pour commander le système de transducteur ultrasonore (32) et traiter des signaux reçus à partir du système de transducteur ultrasonore (32) ; et
**caractérisé par** une masse gélifiée (20) configurée pour former un corps allongé entourant l'outil d'inspection en ligne (14) pendant une inspection de pipeline, dans lequel la masse gélifiée (20) est en outre configurée pour constituer un corps autoportant pendant une inspection de pipeline présentant ses surfaces périphériques contiguës aux surfaces intérieures du pipeline inspecté (12), la masse gélifiée (20) comprenant une partie avant (22), une partie intermédiaire (24) dans laquelle l'outil d'inspection en ligne (14) est situé pendant une inspection de pipeline, et une partie arrière (26).

2. Système selon la revendication 1, dans lequel la masse gélifiée (20) est configurée pour se conformer à un diamètre intérieur variable du pipeline inspecté (12).

3. Système selon l'une quelconque des revendications précédentes, dans lequel au moins l'une de la partie avant (22) et de la partie arrière (26) comprend au moins un outil d'étanchéité (34, 36) pendant une inspection de pipeline.

4. Système selon l'une quelconque des revendications précédentes, dans lequel la masse gélifiée (20) est configurée pour s'ajuster dans le volume d'un lanceur d'outil d'inspection en ligne (38).

5. Système selon l'une des revendications précédentes, dans lequel la masse gélifiée (20) est un milieu de viscosité élevée présentant une impédance acoustique sensiblement appariée au système de transducteur ultrasonore (32).

6. Système selon l'une quelconque des revendications précédentes, dans lequel la masse gélifiée (20), pendant une inspection de pipeline, fournit un milieu à faible dérivation configuré pour être déplacé à travers le pipeline inspecté par un fluide d'entraînement (30) derrière la masse gélifiée (20) en déplaçant ainsi l'outil d'inspection en ligne (14) à travers le pipeline (12).

7. Système selon l'une quelconque des revendications précédentes, comprenant en outre un dispositif de mémoire configuré pour recevoir et stocker des données représentant des signaux traités provenant du circuit de commande ainsi qu'une interface configurée pour transmettre les données stockées pendant et/ou après une inspection de pipeline.

8. Procédé d'inspection d'un pipeline comprenant les étapes suivantes consistant à :
• fournir un outil d'inspection en ligne portant un système de transducteur ultrasonore configuré pour émettre des impulsions d'énergie ultrasonore en réponse à des impulsions électriques et convertir l'énergie ultrasonore reçue en signaux électriques, dans lequel le système de transducteur ultrasonore est couplé à des circuits de commande configurés pour commander le système de transducteur ultrasonore et traiter des signaux reçus à partir du système de transducteur ultrasonore ;
• entourer l'outil d'inspection en ligne dans une masse gélifiée ; et
• déplacer l'outil d'inspection en ligne entouré par la masse gélifiée à travers le pipeline
dans lequel la masse gélifiée (20) forme un corps allongé entourant l'outil d'inspection en ligne (14) pendant une inspection de pipeline, dans lequel la masse gélifiée (20) est en outre configurée pour constituer un corps autoportant pendant une inspection de pipeline présentant ses surfaces périphériques contiguës aux surfaces intérieures du pipeline inspecté (12), la masse gélifiée (20) comprenant une partie avant (22), une partie intermédiaire (24) dans laquelle l'outil d'inspection en ligne (14) est situé pendant une inspection de pipeline, et une partie arrière (26).

9. Procédé selon la revendication 8, dans lequel les étapes consistant à fournir l'outil d'inspection en ligne et à entourer l'outil d'inspection en ligne dans une masse gélifiée sont exécutées dans le volume d'un lanceur et dans lequel l'outil d'inspection en ligne entouré par la masse gélifiée est ensuite lancé dans le pipeline.

10. Procédé selon l'une des revendications 8 et 9, comprenant en outre les étapes consistant à
• fournir au moins un outil d'étanchéité dans la partie avant pour étanchéifier la masse gélifiée à l'encontre d'un fluide transporté à travers le pipeline ; et/ou
• fournir au moins un outil d'étanchéité dans la partie arrière pour étanchéifier la masse gélifiée à l'encontre du fluide transporté à travers la canalisation.

11. Utilisation d'une masse gélifiée (20) comme milieu qui facilite la transmission d'énergie ultrasonore pendant une inspection de pipeline et entourant un outil d'inspection en ligne (14) portant un système de transducteur ultrasonore (32) pendant une inspection de pipeline, dans lequel la masse gélifiée (20) est configurée pour former un corps allongé entourant l'outil d'inspection en ligne (14) pendant une inspection de pipeline, dans laquelle la masse gélifiée (20) est en outre configurée pour constituer un corps autoportant pendant une inspection de pipeline présentant ses surfaces périphériques contiguës aux surfaces intérieures du pipeline inspecté (12), la masse gélifiée (20) comprenant une partie avant (22), une partie intermédiaire (24) dans laquelle l'outil d'inspection en ligne (14) est situé pendant une inspection de pipeline, et une partie arrière (26).
